# EUROPEAN PATENT SPECIFICATION

(11) **EP 0 428 371 B1**
(45) Date of publication and mention of the grant of the patent: **13.05.1998**
(21) Application number: 90312356.0
(22) Date of filing: 13.11.1990
(51) Int. Cl.: H04N 1/04, H04N 1/203

(54) **Scanning carriage motion control in an image input device**
Bewegungssteuerung für einen Abtastwagen in einer Bildeingangsvorrichtung
Commande de transport du chariot d'analyse d'un dispositif d'entrée d'images

(30) Priority: 13.11.1989 US 435918
(43) Date of publication of application: 22.05.1991
(73) Proprietor: XEROX CORPORATION, Rochester, New York 14644 (US)
(72) Inventor: Rogalski, Eugene A, Rochester New York 14609 (US)
(74) Representative: Reynolds, Julian David

(56) References cited:
- GB-A- 2 195 179
- US-A- 4 216 378
- US-A- 4 641 357
- 1988 INTERNATIONAL CONFERENCE ON CONSUMER ELECTRONICS vol. 34, no. 3, August 1988, NEW YORK ,NY ,USA pages 497 - 504; ADACHI ET AL.: 'A NEW CAMERA-TYPE COLOR IMAGE SCANNER WITH A HIGH SPEED SCANNING MECHANISM'

## Description

This invention relates generally to input scanners for acquisition of image information, and more particularly to an input scanner with an array of image scanning sensors suitable for scanning documents presented on a scanning platen, and to motion control of the scanning carriage in such a device.

Acquisition of information adaptable for electronic processing applications directly from printed original documents has become greatly desirable as an adjunct to electronic document production. An important reason for its desirability is the subsequent capability of manipulation of the electronically stored information for editing, compiling and using the information in forms other than that in which it was originally available. While such manipulation is, of course, available for image information produced originally and available in an electronic format, it is desirable to have a similar capability for image information not so available. Accordingly, it is desirable to have an image information input capability for such information. In addition to the production of new documents from electronically stored information, it will also be appreciated that some copying functions available in light lens-type copiers, copying images directly from original documents, may be more readily accomplished if image information is available electronically. Thus, with the capability of electronic input of information, coupled with available output devices, functions such as duplex copying, image rotation, cropping, editing, etc., are possible without the requirement of difficult mechanical manipulation of originals and copies.

A particular problem associated with electronic acquisition of image information is the speed of possible input. Heretofore, scanning arrays, i.e., linear or two dimensional arrays of semiconductor elements suitable for detection of light from an illuminated image, have been limited in see by an inability to manufacture sizable lengths thereof, thereby requiring optical magnification and focusing elements to derive an image from a document suitable for detection by the sensors of the scanning array. It has often been necessary to provide overlapping lengths of small sensor arrays to build longer lengths to accommodate document scanning. While these scanning arrays have had some success, they require extensive software manipulation to provide a correct output image, resulting in slower data or image acquisition rates. In view of the slow rate of data acquisition, relatively little work has been done on a faster document handling system for such arrangements. Recently, however, scanning arrays have become available which include a linear array of sensors extending the full width of a document. These arrays may be used to scan a document with a single pass, without magnification or optical manipulation of the image to accommodate the size to the scanning array, or software manipulation of images from overlapping arrays. These arrays are also improving in speed of image acquisition so that less time is required for each sensor to derive sufficient light information about a given image point, and transfer the information to an electronic data processor. Such arrays and their benefits over previous types of sensor arrays are described in US-A-Patent No. 4,604,161 to Araghi, incorporated herein by reference.

In view of the above factors, it has become desirable to provide arrangements allowing faster document handling, particularly adapted to these applications of input scanners. It is desirable to provide a scanning device for scanning duplex documents, i.e., original documents having image information on both sides, for simplex documents having image information only on a single side, and for material not adaptable to be passed through sheet handling devices. In the past, this feature has been approached in input scanners in a variety of ways. As shown in US-A-4,536,077 to Stoffel, an arrangement is provided with an optical system to direct light reflected from a first side of the document to a single scanning array, while the document is moving past a first position, and subsequently directing light from the second side of the document to the scanning array when it has reached a second position. The arrangement does not optimally substantially simultaneously scan the both sides of the document, requires expensive optical arrangements to transmit the image optically to the single sensor, and allows the operation of only a single sensor during a selected period of time. A disclosure entitled "Automatic Duplex Document Electronic Scanning" by Richard E. Smith, and published at Xerox Disclosure Journal, Vol. 8, No. 3, May/June, 1983 at page 263, demonstrates both side scanning of a document with two spaced apart scanning arrays arranged on opposite sides of a document path, and platen scanning by a movable carriage supporting one of the arrays. This arrangement requires multiple scanning positions and document advancement through the scanning areas at significant expense.

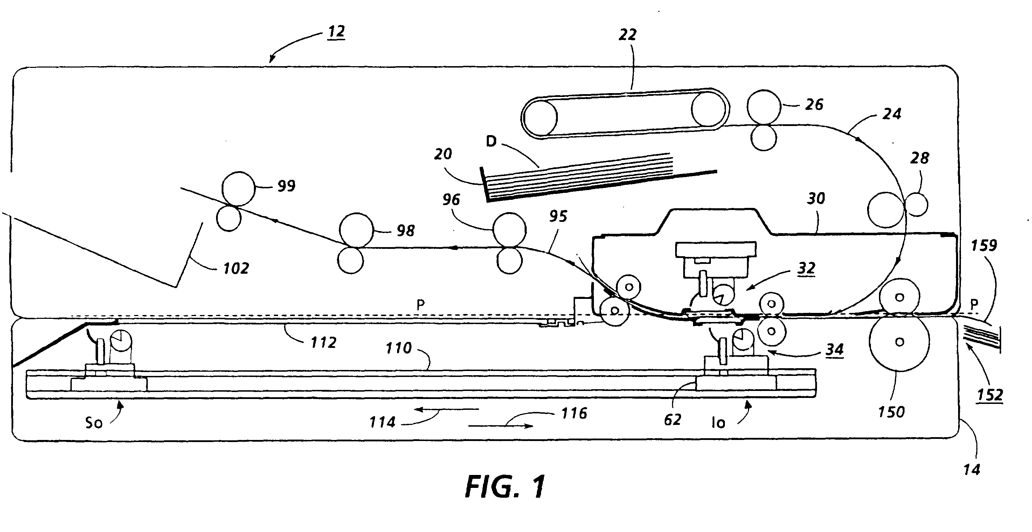

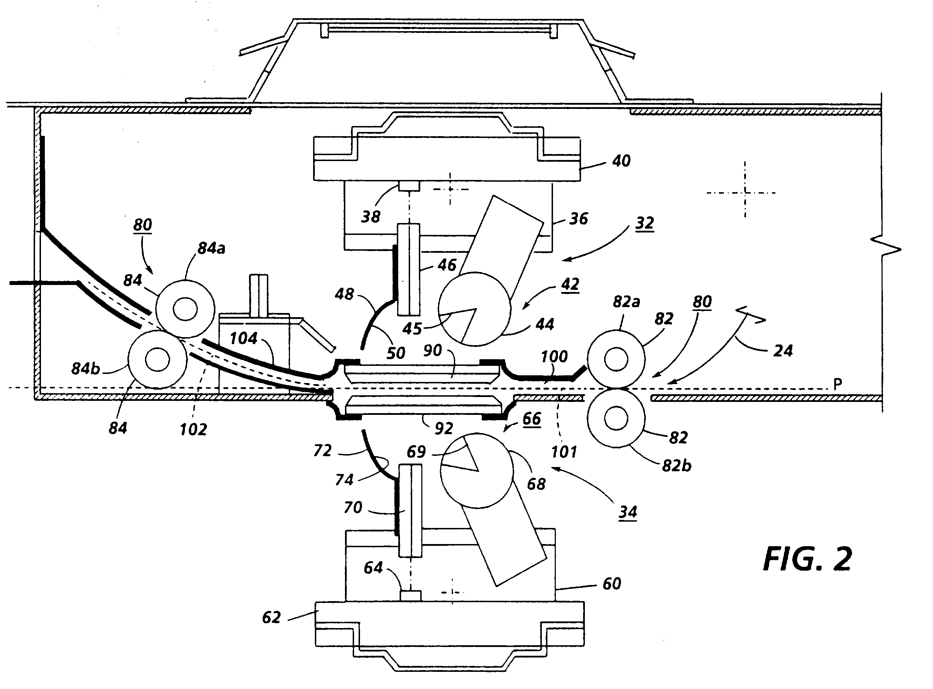

US-A-4,216,378 discloses an optical scanner for scanning an image on a document, including a transparent plate 10 for supporting the document, with reference grating 18 positioned adjacent the platen 10 and defining a plurality of position indicating indicia in the form of lines or markings 20. A fixedly mounted photoelectric transducer 22 includes an array of photodiodes 26, and a photodiode (24) at one end thereof which receives light reflected from the indicia 20 during scanning, the scanning being achieved by means of a rotatable mirror 32 which causes light reflected from successive points along scanlines to be directed to diodes 26,24. The frequency of the pulses from the diode corresponds to the rate at which scanning progresses along the document. This pulse signal may be compared (phase locked) with a reference scanning signal of uniform frequency to provide control of the mirror velocity (Figs. 1 and 2), or may be input to a binary counter to adjust motor control current based on scanning position.

US-A-4,641,357 discloses a system for reading out a document image, comprising a movable table or platen 1 for supporting a document 4, the table 1 having a pattern 3 of diagonal stripes disposed along one edge, outside the image area of the document 4. Light reflected off the pattern 3 and document 4 is detected by a fixed CCD array 9 via mirror 7. CCD signals corresponding to the stripe pattern 3 are used to control motion of the table 1.

The present invention provides an input scanner including: an elongate array of photosensitive elements to derive from a document an electronic representation of an image on the document based on detected light reflected therefrom, said array being oriented parallel to said document; scanning means for producing scanning of the document by the array; means for controlling movement of the scanning means in dependence upon detected actual scanning movement; photosensitive means, supported at a position outside the area at which the document image is detectable; a fine resolution target having a series of detectable indicia arranged parallel to the direction of scanning movement, at a position for detection by photosensitive means; means for counting, during scanning, the number of indicia detected by photosensitive means to produce a value indicative of position; and means for comparing the counted value with a desired position value to produce a feedback response for the scanning means: characterised in that the array is supported on a scanning carriage adapted for relative scanning movement with respect to the document and oriented transverse to the direction of scanning movement; in that the input scanner is operable in at least first and second modes; in that the scanning means includes drive means for controllably driving, in said first and second modes, respectively, one of said scanning carriage or said document with respect to the other; in that the photosensitive means comprises a plurality of photosensitive elements of said array of photosensitive elements; and in that the scanner further comprises means for deriving, from a stream of periodically produced image data comprising signals indicative of reflected light detected by each photosensitive element in the array, the signals from said plurality of photosensitive elements representing light reflected from said fine resolution target, for use by said counting means.

The invention further provides a method for deriving positional information in an input scanner, according to claim 7 of the appended claims.

Position and velocity encoders are somewhat expensive devices which require additional control circuitry for use. The present invention seeks to utilize the availability of unused photosensitive devices on the image device to emulate the operation of a position encoder.

The present invention further provides an input scanner including an array of photosensitive elements supported on a scanning carriage for scanning past a document supported on an imaging surface to derive from said document a stream of image pixels forming an electronic representation of an image on the document based on detected reflected light therefrom, said array arranged on said scanning carriage parallel to said document and transverse to the direction of scanning movement; drive means for controllably driving said scanning carriage in scanning movement past the document; and means for controlling the drive means in response to actual movement of the scanning carriage comprising:
a group of photosensitive elements in said array of photosensitive elements supported on said scanning carriage at a position outside the area at which the document image is detectable;
a fine resolution target supported adjacent said imaging surface at a position thereon, and having a series of photosensitive element detectable indicia arranged parallel to the direction scanning movement at a position for detection by said small number of photosensitive elements;
means for counting, during scanning movement, the number of indicia detected by said group of photosensitive elements to produce a value indicative of position; and
means for comparing the counted value with a desired position value to produce a feedback response for the drive means.

The present invention also provides an input scanner including a document supporting surface for supporting a document having an image for scanning:
an array of photosensitive elements supported on a scanning carriage;
means for providing relative scanning movement between said array of photosensitive elements and said document supporting surface to derive from said array of photosensitive elements a stream of image pixels forming an electronic representation of an image on the document based on detected reflected light therefrom;
said array arranged on said scanning carriage parallel to said document and transverse to the direction of relative movement;
drive means for controllably driving one of said scanning carriage or said document supporting surface in relative movement to enable scanning of the document;
a group of photosensitive elements in said array of photosensitive elements supported on said scanning carriage at a position outside the area at which the document image is detectable;
a fine resolution target supported on said document supporting surface at a position for detection by said group of photosensitive elements, and having a series of detectable indicia arranged parallel to the direction scanning movement at a position for detection by said small number of photosensitive elements;
means for counting, during scanning movement, the number of indicia detected by the small number of photosensitive elements to produce a value indicative of position; and
means for comparing the counted value with a desired position value to produce a feedback response for the drive means.

During use of a scanner in accordance with the invention, the array of photosensitive elements periodically produces a stream of image data, said image data comprising signals indicative of reflected light detected by each photosensitive element in the array.

The scanner may include means for deriving, from the stream of image data, the signals from the said group of photosensitive elements representing light reflected from the fine resolution target.

The fine resolution target may include an array of lines, each line separated by a space of equivalent size, said lines having a length approximately equivalent to said relatively small number of photosensitive elements, and oriented parallel to said array of photosensitive elements.

The means for counting the number of indicia detected may include a transition detector for determining the movement by the carriage past a line to a space between successive lines, and a counter for counting the number of transitions, said counter value producing said value indicative of position.

By way of example only, an embodiment of the invention will now be described with reference to the accompanying drawings, in which:
Figure 1 is a somewhat schematic view of an input scanning device in accordance with the present invention;
Figure 2 is an enlarged view of the moving document scanning station of the device in Figure 1;
Figure 3 is a somewhat schematic sectional top view of the platen scanning arrangement of the device of Figure 1;
Figure 4 is a cutaway side view showing a portion of the platen scanning arrangement of the device of Figure 1; and
Figure 5 is a circuit arrangement for use in the scanning device.

Referring now to the drawings, Figure 1 shows an input scanner 10 for generating an electronic representation of an image on a document. As used hereinafter, "document" refers to an image bearing original from which copying is desired. Documents may comprise image supporting substrates, such as cut sheets of paper, transparencies or other individual pieces of flimsy material, unburst computer forms forming a continuous length of material, or any image bearing substrate from which copying is desired. When necessary, the type of document for which the description finds use will be described with greater particularity. "Image" as used herein refers to the information on the document, for which scanning is desired, and which will be in some manner copied to another substrate or to an electronic storage medium. "Scanning" as used hereinafter, refers to the relative movement of photosensitive sensors with respect to documents for the purpose of acquiring an electronic representation of the image or information about the image.

Input scanner 10 may be comprised of upper and lower frame members 12 and 14. Upper and lower frame members 12 and 14 may be generally rectangular box-shaped members, connected by a hinge member (not shown) along lower and upper rear edges of frame members 12 and 14, respectively. Upper and lower frame members 12 and 14 are separable in a clam shell fashion at the hinge member to allow access to the area thereinbetween as will hereinafter be described.

Upper frame member 12 is provided with a document input tray 20 for holding a stack of documents D such as cut sheets of paper face-up in the document tray from which data acquisition is desired. Document input tray 20 is provided with a document feeder 22 for feeding documents D out from document input tray 20. In a preferred form, document feeder 22 is a well-known top feeding vacuum corrugated feeder found in standard document feeders for light-lens type copiers for feeding documents in a 1-N order. Document input tray 20 may also be upwardly biased or provided with a tray elevator (not shown) to provide documents D in position for feeding.

Documents D are directed by document feeder 22 to an input sheet path 24 to be directed to a scanning position. Along sheet path 24, documents D are driven along by nip roll 26, comprising a pair of rubber rollers which drive the documents in a forward direction along the sheet path 24. A second nip roll 28 may advantageously comprise a cross roll deskewing nip to provide documents in a desired registered position before entering the scanning station. A drive motor (not shown) is provided for driving the document feeder, and drive rollers in the nips, as well as the other driving elements of input scanner 10.

Documents D are driven along input sheet path 24 into scanning station 30. Scanning station 30 is comprised of upper and lower scanning elements 32 and 34. Upper scanning element 32 is fixed in position with respect to sheet path 24, and comprises an upper scanning element frame generally indicated as 36 (Fig. 2). Frame 36 extends transversely across and above the path of document travel, for the support of the scanning array for scanning a document passing thereunder. On an upper portion of frame 36, scanning array 38 is supported on scanning array support member 40, transverse to the path of sheet travel thereby for scanning documents. Scanning array support member 40 is a relatively rigid member fixed to the frame 36 by fasteners or adhesives, and supporting scanning array 38 in position across the path of document travel, without sagging or twisting which could cause imaging imperfections. Scanning array 38 may be a linear array of photosensitive sensors such as CCD's or photodiodes which are controlled to sense light reflected from documents during an integration period. The photosensitive sensors develop a charge indicative of the amount of light detected, for transmission to an image processor for use in assimilating an electronically stored representation of the image on the document. In a preferred form, the array comprises several smaller arrays putted at their ends to each other to form an unbroken array, as described in US-A 4,604,161 to Araghi, although other sensor array arrangements are possible.

With reference to Figure 2, documents directed past scanning element 32 are illuminated by a lamp assembly supported on frame 36 and comprising lamp 42, and lamp cover 44 having aperture 45 engaged to a power supply (not shown) and directing light towards the document to be scanned. Light from the illuminated document is reflected to lens 46, comprising a bundle of image transmitting fiber lenses produced under the trade name of "SELFOC" by Nippon Sheet Glass Company Limited, provided to direct light reflected from the document to scanning array 38. Adjacent to the portion of lens 46 closest to the document is a reflector member 48, extending generally towards the document which may be advantageously provided with a light reflecting concave surface 50 to further aid in directing light from lamp 42 to illuminate the document. It will, of course, be appreciated that other optical and illuminating systems may be used to illuminate and direct light from the document to the scanning array 38. Lower scanning element 34 is provided as a mirror image of scanning element 32, including a frame 60, scanning array support member 62, scanning array 64, lamp assembly including lamp 66 and lamp cover 68 having aperture 69, lens 70 and reflector member 72 having a reflective surface 74. The primary difference between the two scanning elements is that the lower scanning element 34 is arranged in a position opposing that of upper scanning element 32, in order to scan images on a side of the document opposite to that scanned by the upper scanning element 34. Accordingly, images on the upper face of documents, passing through the scanning station 30 are illuminated and scanned by upper scanning element 32, while images on the lower face of the document are illuminated and scanned by the lower scanning element 34. In practice, it is preferable to have the elements slightly offset from one another so that the illumination provided for scanning one side of the document does not cause shadows detectable by the sensors in the scanning arrays to show through the documents. In one form, upper scanning element 32 is journaled for rotation about an axis transverse to the direction of sheet travel and parallel to the path of sheet travel, to bring the optical elements to a position for viewing a calibration target.

Sheets transported through scanning station 32 are directed between platen glass members 90 and 92 supported respectively on upper and lower frame members 12 and 14 which serve to maintain flatness in documents advancing therethrough for scanning. The platen glass members 90 and 92 are each about 4 mm thick, for support of the document as it passes through the scanning station. The platen glass members 90 and 92 are supported with a spacing of about 0.6 mm between them. The glass thickness and gap are chosen to be as small as possible because the depth of field of the SELFOC lens is very small. In another form, a document is biased against a single platen glass member by a baffle, thereby achieving the required flatness while the document passes through the scanning station.

Documents entering the scanning station are driven into and through the station by a four roll Constant Velocity Transport (CVT) arrangement 80 comprising upstream and downstream sets of rolls 82 and 84 located at the entry and exit to the scanning station, respectively. Each nip roll pair is comprised of upper idler rolls 82a and 84a and lower drive rolls 82b and 84b. Drive rolls 82b and 84b are driven by a motor (not shown) through a timing belt arrangement that maintains the speed of the rolls and accordingly, the speed of documents moved by the rolls at a carefully controlled constant velocity. Downstream rolls 84 are located above the imaging plane so as to not interfere with movement of the lower scanning element 34.

As documents are advanced through scanning station 30, photosensitive sensors on scanning arrays 38 and 64 are exposed to light reflected from the document to derive an electronic representation of the image thereon for transmission to an image processing or storage device. In a preferred form, for duplex documents, image information from each side of the document is derived and transmitted alternately by each respective array. Thus, for example, while array 38 is deriving image information, array 64 may be transferring previously derived image information out of the array.

With reference again to Figure 1, upon leaving the scanning station 32, documents are driven by the CVT through sheet path 95 wherealong documents are driven by nip roll pairs 96, 98 and 99 into an output tray 102. The passage of documents along the described sheet path, having a generally U-shape, with a single fold, and feeding the documents in the input tray 20 from the top of the input stack, provides a single natural inversion of the documents, so that they are arranged face down in output tray 102 in the same order that they were originally provided. In a preferred form, the output tray is a simple low energy uphill stacking tray without requirement for mechanical document handling therein. While an arrangement providing a document handler recirculating the documents back to an input tray is certainly possible, there is no need for the expensive and complicated mechanical document handling in those devices, since there is no need to repeatedly present the document for copying as in a light lens copier. Both sides of the document may be read simultaneously, and the image information stored for copying as desired in an electronic storage medium.

Lower scanning element 34, normally arranged closely adjacent to scanning element 32, is also supported for reciprocating scanning movement, as will be described hereinafter, on support rails 110. Support rails 110 are provided in lower frame portion 14, parallel to the direction of document travel of sheet travel through scanning station 30, and located, in a preferred embodiment, generally on either side of the path of sheet travel. In Figure 1, only a single support rail 110 is shown, but usually at least two will be provided. Scanning element 34 may be provided with bearings or bushings to reduce sliding friction between scanning element 34 and the rails 110. Rails 110 support the scanning element 34 for movement across the length of lower frame portion 14 slightly below a scanning platen 112. Scanning platen 112 is a generally rectangular member having a size allowing the placement of documents thereon for scanning by the scanning element 34 as it moves across the length of the lower frame 14. Scanning platen 112 is supported at its edges on lower frame 14. Scanning platen 112 supports documents not readily fed from document input stack 20, such as pages of books, single sheets in bound documents, documents too thick, fragile or damaged to be fed along paper paths 24 and 100 or objects having surfaces, or profiles desired to be copied. On selection of platen copying, i.e., copying of images from a document placed on scanning platen 112, lower scanning element 34 moves from an initial position I₀ fixed with respect to upper scanning element 32, and generally adjacent a first end of the scanning platen 112, across the length of lower frame 14 and scanning platen 112 in the direction of arrow 114 to a start of scan position S₀ at the opposite end of the scanning platen. In a preferred embodiment, during the movement of the scanning element 34 to position S₀ the scanning array is generally inoperative for acquiring image data, although it is well within contemplation of the invention to either scan the document for image information, or to provide a pre-scan operation which allows a fast, gross scanning operation to derive an appropriate contrast level, or threshold information for use by the image processing device. Image scanning is preferably accomplished by movement of the lower scanning element from position S₀ back to position I₀ in the direction indicated by the arrow 116. During that movement of the scanning element 34, the array 64 of photosensitive elements produces a stream of image data, comprising signals indicative of reflected light detected by each element in the array.

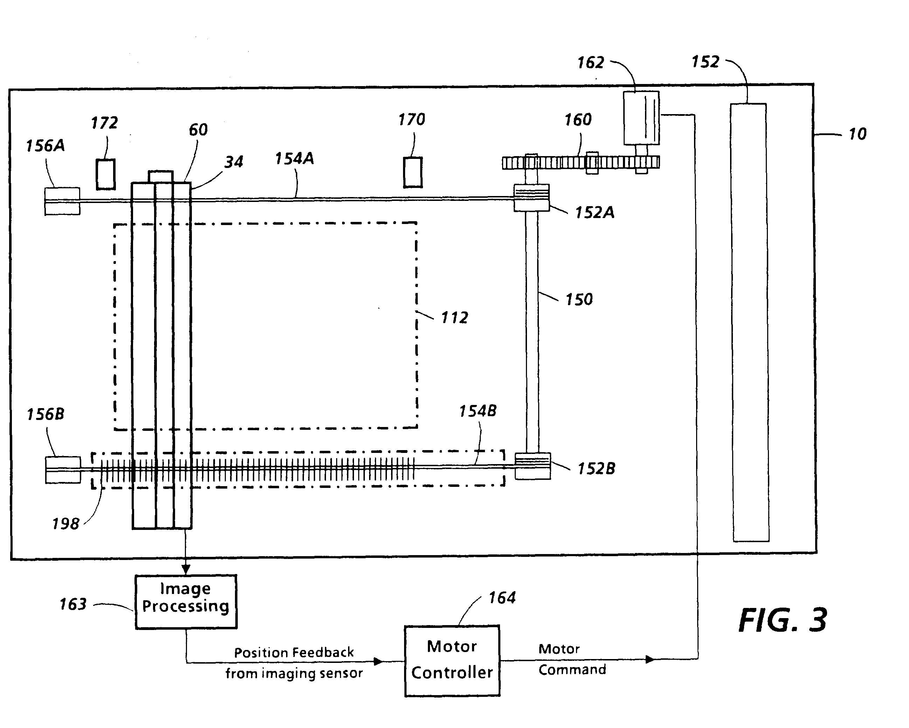

As shown schematically in Figure 3, scanning element 34 is driven in its movement by a suitable drive arrangement providing a very smooth, non-vibrating motion through lower frame 14, past scanning platen 112, such as, for example, a pulley and cable system or a lead screw drive system. In Figure 3, dual capstans aligned on a drive shaft and a cable drive arrangement are shown, although a single capstan drive arrangement may be used. In the described embodiment, a dual capstan drive arrangement includes drive shaft 150 and capstans 152A and 152B. Cables 154A, 154B wrap around capstans 152A and 152B respectively. Cables 154A and 154B loop around pulleys 156A and 156B, respectively and are connected in driving engagement with either end of the frame 60 of scanning element 34, so that rotation of the drive shaft 150 drives scanning element 34 in its scanning motion. Drive shaft 150 is connected via a belt 160 or gear arrangement to motor 162. Motor 162 is driven in accordance with motor commands from motor controller 164, as will be further described hereinafter. A pair of sensors 170 and 172 define the end of scan limits at either end of the platen 112.

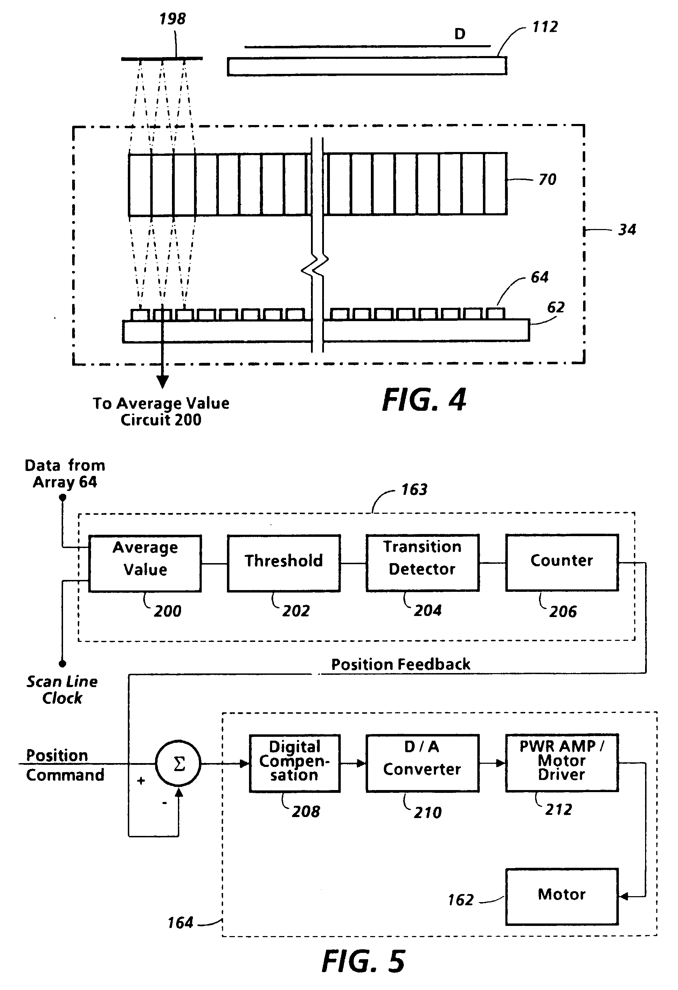

With reference to Figures 3 and 4, a fine resolution target, indicated by lines 198, is provided along the path of the scanning carriage, at a position for detection by array 64 positioned outside the area of image acquisition or outside the area of platen 112. In this area of photosensitive element array 64, there are typically several unused elements, from which acquired data is ignored. Typically the lines will be about 8-10 pixels long (although Figure 3 shows fewer photosites for detection of the line for the purpose of illustrating the invention, only) extending in a direction parallel to the length of the array, at a relatively high frequency. The frequency required is based on the speed of the scanning device, as will be further described. The image of the line target will be available for several photosensitive elements to assure that the line is detected by a working element that accurately detects the line. An average value over several elements may be used. In an alternative embodiment of the invention two targets arranged side by side, and out of phase by 90° may be used, to provide incremental quadrature encoding of the carriage position to determine direction of travel. Alternatively, the lines may have a non-uniform width or frequency, if for some reason variations in the control signal produced by detection of the lines is desired, such as for controlling acceleration, as in US-A 4,386,842 to Beery.

Selection of the frequency of the line pairs (each combination of a line and the associated adjacent space before the next line) depends upon the motion requirements of the scanning device, the drive method, and scan carriage speed requirements, and the image sensing speed and resolution. The frequency of the lines may be chosen to be less than the resolution of the image sensor, so that as the scanning carriage moves, each line or adjacent space is detected and the relative position of the scanning carriage from the home position is correctly identified. Accordingly and in emulation of standard encoding devices, a target resolution of about 150 line pairs per inch (60 lines per cm) operates satisfactorily in a 600 spot per inch (240 spots per cm) scanning device that operates at a scanning speed of about 8 inches per second (20 cm/sec) with a drive ratio of about 4:1 and capstan diameter of 0.63 inches (16mm). Similarly, a target resolution of about 100 line pairs per inch (40 line pairs per cm) operates satisfactorily in a 400 spot per inch (160 spots per cm) scanning device that operates at a scanning speed of approximately 7 inches per second (17.5 cm/sec) with a drive ratio of about 4:1 and capstan diameter of 0.63 inches (16mm).

As the scanning element 34 is scanning past the platen, the scanning array moves past and detects light reflected from the array of target lines. The image data may be removed from those sensors in a number of ways and directed to the image processing section 163 of the device. If desired, the data output of that group of pixels may be hardwired to motor controller 164, but otherwise operated in a manner similar to the remaining photosensitive elements in the array. Alternatively, the target data may be removed with the data, with the usual counter counting to the target pixels and directing those pixels to the motor controller. In yet another mode of operation, as described in US-A-4 897 803, each derived data byte is assigned a unique address token value in a scan line, and a comparison function may be used to detect addressed image data values from a predefined number of addresses. Because the data acquired is in analog form, it may be desirable to threshold the value, or calculate an average and threshold the average value, to account for bad photosensitive elements and noise. Accordingly, in Figure 5, image data from the encoder pixels for any particular scan line is directed to an averaging circuit 200, which averages the detected values for each scan line. The resulting value may then be thresholded at threshold device 202 against a known value to produce a binary output, indicative of detection or non-detection of one of the array of lines during a given integration period. This result is directed to a transition detection circuit 204, which compares a current detection value with the detection value of a previous scan line. If a transition is detected to occur, counter 206 is incremented. The value at counter 206 (the position feedback) is subtracted from the carriage position command. The resulting position error can then be digitally compensated at digital compensation circuit 208 using the appropriate digital control scheme. The resulting compensated digital control signal represents the amount of correction required to locate the scanning carriage at the proper relative position. This digital control signal is then converted to an analog value, at digital to analog converter 210 suitable for driving the pulse width modulated amplifier 212 which provides the motor driving signals. Of course, by measuring change of position (or the number of transitions) over time a velocity value may also be derived. Comparing this value with a desired velocity value would result in a velocity error value, which could be used in a velocity control scheme.

Control of the described arrangement may be accomplished in a variety of ways, depending on the planned usage of the device. Feeding of documents and control of sheets directed through the sheet path during the described modes of operation, including movement of the scanning element 34 in its scanning motion across the platen, may be controlled by an onboard microprocessor of the type commonly used in the control of light lens copiers, or prior scanners and tailored to the application required by the present device. Control of the imaging assembly may also be carried out by an on-board microprocessor device which repeatedly polls the sensors of sensor arrays 38 and 64 to derive charge information indicative of the image on documents scanned thereby, assigns the derived data with address information and provides the addressed information as an output. The control of the device is responsive to operator information input. Alternatively, the described device may be partially or completely controlled by another device, such as for example, a computer, a local or remote workstation or compatible printer.

It will no doubt be appreciated that, although the above description refers to a moving scanning element 34 and a stationary platen 112, the arrangement described is generally applicable for controlling relative movement between scanning elements and a document supporting surface. Accordingly, a similar arrangement could be used to provide for feedback control of relative motion in a device with a moving platen and stationary scanning element.

## Claims

1. An input scanner including: an elongate array (64) of photosensitive elements to derive from a document (D) an electronic representation of an image on the document based on detected light reflected therefrom, said array being oriented parallel to said document; scanning means (32,34,82-84,162; 34,62,110,162) for producing scanning of the document by the array; means (164) for controlling movement of the scanning means in dependence upon detected actual scanning movement; photosensitive means supported at a position outside the area at which the document image is detectable; a fine resolution target having a series of detectable indicia (198) arranged parallel to the direction of scanning movement, at a position for detection by photosensitive means; means (206) for counting, during scanning, the number of indicia detected by photosensitive means to produce a value indicative of position; and means for comparing the counted value with a desired position value to produce a feedback response for the scanning means;
characterised in that the array (64) is supported on a scanning carriage (60) adapted for relative scanning movement with respect to the document and oriented transverse to the direction of scanning movement; in that
the input scanner is operable in at least first and second modes; in that
the scanning means (32,34,82-84,162; 34,62,110,162) includes drive means (162) fcr controllably driving, in said first and second modes, respectively, one of said scanning carriage or said document with respect to the other; in that
the photosensitive means comprises a plurality of photosensitive elements of said array of photosensitive elements; and in that the scanner further comprises
means for deriving, from a stream of periodically produced image data comprising signals indicative of reflected light detected by each photosensitive element in the array, the signals from said plurality of photosensitive elements representing light reflected from said fine resolution target, for use by said counting means.

2. A scanner as defined in claim 1, wherein the fine resolution target includes an array of lines, each line separated by a space of equivalent size, said lines having a length approximately equivalent to said group of photosensitive elements, and oriented parallel to said array of photosensitive elements.

3. A scanner as defined in claim 2, wherein said means for counting, during scanning movement, the number of indicia detected, includes a transition detector for determining the movement past a line to a space between successive lines comprising a transition, and a counter for counting the transitions detected, said counter value producing said value indicative of position.

4. A scanner as defined in any one of the preceding claims, including means for deriving, from image data produced by the said array, the signals from said group of photosensitive elements representing light reflecting from said fine resolution target.

5. A scanner as defined in any one of the preceding claims, including a document supporting surface for supporting a document having a image for scanning, and wherein the fine resolution target is supported on the document supporting surface.

6. A scanner as defined in claim 5, wherein the scanning carriage is movable past a document on the supporting surface.

7. A method of deriving positional information in an input scanner including: an elongate array (64) of photosensitive elements to derive from a document (D) an electronic representation of an image on the document based on detected light reflected therefrom, said array being oriented parallel to said document and; scanning means (32,34,82-84,162; 34,62,110,162) for producing scanning of the document by the array; means (164) for controlling movement of the scanning means in dependence upon detected actual scanning movement, comprising:
providing photosensitive means, supported at a position outside the area at which the document image is detectable; and a fine resolution target having a series of detectable indicia (198) arranged parallel to the direction of scanning movement, at a position for detection by photosensitive means;
counting, during scanning, the number of indicia detected by photosensitive means to produce a value indicative of position; and
comparing the counted value with a desired position value to produce a feedback response for the scanning means;
characterised by providing the array (64) supported on a scanning carriage (60) adapted for relative scanning movement with respect to the document and oriented transverse to the direction of scanning movement; the photosensitive means comprising a plurality of photosensitive elements of said array of photosensitive elements; in that the scanner is operable in at least first and second modes; and in that the method further comprises the steps of
controllably driving, in said first and second modes, respectively, one of said scanning carriage or said document with respect to the other; and
deriving, from a stream of periodically produced image data comprising signals indicative of reflected light detected by each photosensitive element in the array, the signals from said plurality of photosensitive elements representing light reflected from said fine resolution target, for use in said counting step.

## Patentansprüche

1. Eingabescanner mit:
einem länglichen Array (64) aus lichtempfindlichen Elementen, um von einem Dokument (D) eine elektronische Wiedergabe eines Bildes auf dem Dokument zu erhalten, indem das vom Dokument reflektierte Licht festgestellt wird, wobei das Array parallel zu dem Dokument angeordnet ist,
einer Scaneinrichtung (32, 34, 82-84, 162; 34, 62, 110, 162), um das Dokument mit Hilfe des Arrays zu scannen,
einer Einrichtung (164) zum Steuern der Bewegung der Scaneinrichtung in Abhängigkeit von der festgestellten tatsächlichen Scanbewegung,
einer lichtempfindlichen Einrichtung, die an einer Position außerhalb des Bereichs angeordnet ist, bei dem das Bild des Dokuments festgestellt werden kann,
einem Feinauflösungsziel mit einer Reihe von feststellbaren Indizes (198), die parallel zu der Richtung der Scanbewegung an einer Position für die Feststellung durch die lichtempfindliche Einrichtung angebracht sind,
einer Einrichtung (206) zum Zählen der während des Scannens durch die lichtempfindliche Einrichtung festgestellten Anzahl von Indizes, um einen Wert zu erzeugen, der die Position angibt,
und einer Einrichtung zum Vergleichen des gezählten Werts mit einem gewünschten Positionswert, um eine Rückkopplungsantwort für die Scaneinrichtung zu erzeugen,
dadurch gekennzeichnet, daß
das Array (64) auf einem Scanwagen (60) gehalten wird, der für eine relative Scanbewegung gegenüber dem Dokument ausgebildet und quer zu der Richtung der Scanbewegung ausgerichtet ist,
der Eingabescanner in wenigstens einem ersten und einem zweiten Modus betrieben werden kann;
die Scaneinrichtung (32, 34, 82-84, 162; 34, 62, 110, 162) eine Antriebseinrichtung (162) umfaßt, um im ersten oder im zweiten Modus jeweils entweder den Scanwagen oder das Dokument in Bezug aufeinander anzutreiben,
die lichtempfindliche Einrichtung eine Vielzahl von lichtempfindlichen Elementen aus dem Array aus lichtempfindlichen Elementen umfaßt,
und dadurch, daß der Scanner weiterhin umfaßt:
eine Einrichtung, um aus einem Strom von periodisch erzeugten Bilddaten, der die Singale umfaßt, die das durch jedes lichtempfindlichen Element im Array festgestellte Reflexionslicht wiedergeben, diejenigen Signale von der Vielzahl von lichtempfindlichen Elementen zu erhalten, die das vom Feinauflösungsziel reflektierte Licht wiedergeben, damit diese Signale von der Zähleinrichtung verwendet werden können.

2. Scanner nach Anspruch 1, wobei das Feinauflösungsziel eine Linienanordnung umfaßt, wobei die Linien durch einen Abstand entsprechender Größe voneinander getrennt sind, eine Länge aufweisen, die ungefähr derjenigen der Gruppe aus lichtempfindlichen Elementen entspricht, und parallel zu dem Array aus lichtempfindlichen Elementen ausgerichtet sind.

3. Scanner nach Anspruch 2, wobei die Einrichtung zum Zählen der während des Scannens festgestellten Anzahl von Indizes einen Übergangs-Detektor umfaßt, um die Bewegung an einer Linie vorbei und in einen Zwischenraum zwischen aufeinanderfolgenden Linien, was einen Übergang darstellt, zu bestimmen, sowie einen Zähler zum Zählen der festgestellten Übergänge, wobei der Zählerwert den Wert erzeugt, der die Position angibt.

4. Scanner nach wenigstens einem der vorstehenden Ansprüche, der eine Einrichtung zum Erhalten von durch das Array erzeugten Bilddaten enthält, wobei die Signale von der Gruppe von lichtempfindlichen Elementen das von dem Feinauflösungsziel reflektierte Licht wiedergeben.

5. Scanner nach wenigstens einem der vorstehenden Ansprüche, der eine Oberfläche zum Halten eines Dokuments mit einem zu scannenden Bild enthält, wobei das Feinauflösungsziel auf der das Dokument haltenden Oberfläche gehalten wird.

6. Scanner nach Anspruch 5, wobei der Scanwagen an einem Dokument auf der Haltefläche entlang bewegt werden kann.

7. Verfahren zum Erhalten einer Positionsinformation in einem Eingabescanner mit:
einem länglichen Array (64) aus lichtempfindlichen Elementen, um von einem Dokument (D) eine elektronische Wiedergabe eines Bildes auf einem Dokument zu erhalten, indem das von dem Dokument reflektierte Licht festgestellt wird, wobei das Array parallel zu dem Dokument angeordnet ist,
einer Scaneinrichtung (32, 34, 82-84, 162; 34, 62, 110, 162), um das Dokument mit Hilfe des Arrays zu scannen,
einer Einrichtung (164) zum Steuern der Bewegung der Scaneinrichtung in Abhängigkeit von der festgestellten tatsächlichen Scanbewegung,
wobei das Verfahren folgende Schritte umfaßt:
Vorsehen einer lichtempfindlichen Einrichtung, die an einer Position außerhalb des Bereichs angeordnet ist, bei dem das Dokumentbild festgestellt werden kann, und Vorsehen eines Feinauflösungsziels mit einer Reihe von feststellbaren Indizes (198), die parallel zu der Richtung der Scanbewegung an einer Position für die Feststellung durch die lichtempfindliche Einrichtung angeordnet sind,
Zählen der während des Scannens durch die lichtempfindliche Einrichtung festgestellten Anzahl von Indizes, um einen Wert zu erzeugen, der die Position angibt, und
Vergleichen des gezählten Werts mit einem gewünschten Positionswert, um eine Rückkopplungsantwort für die Scaneinrichtung zu erzeugen,
dadurch gekennzeichnet, daß
das Array (64) auf einem Scanwagen (60) gehalten wird, der für eine relative Scanbewegung gegenüber dem Dokument ausgebildet und quer zu der Richtung der Scanbewegung ausgerichtet ist,
die lichtempfindliche Einrichtung eine Vielzahl von lichtempfindlichen Elementen des Arrays aus lichtempfindlichen Elementen umfaßt,
der Scanner in wenigstens einem ersten und einem zweiten Modus betrieben werden kann,
und dadurch gekennzeichnet, daß das Verfahren weiterhin folgende Schritte umfaßt:
gesteuertes Antreiben im ersten oder zweiten Modus jeweils entweder des Scanwagens oder des Dokuments in Bezug zueinander, und
Erhalten derjenigen Signale aus einem Strom von periodisch erzeugten Bilddaten, der die Singale umfaßt, die das durch jedes lichtempfindliche Element im Array festgestellte Reflexionslicht wiedergeben, die aus der Vielzahl von lichtempfindlichen Elementen stammen, die das vom Feinauflösungsziel reflektierte Licht wiedergeben, damit diese Signale von der Zähleinrichtung verwendet werden können.

## Revendications

1. Dispositif de balayage et de numérisation d'entrée comprenant : une matrice allongée (64) d'éléments photosensibles pour obtenir à partir d'un document (D) une représentation électronique d'une image sur le document basé sur la lumière détectée réfléchie à partir de celle-ci, ladite matrice étant orientée parallèlement audit document ; un moyen de balayage (32, 34, 82 à 84, 162 ; 34, 62, 110, 162) pour produire le balayage du document par la matrice ; un moyen (164) pour commander le déplacement du moyen de balayage en fonction du déplacement de balayage actuel détecté ; un moyen photosensible supporté à une certaine position à l'extérieur de la zone sur laquelle l'image du document est détectable; une cible à fine résolution ayant une série de repères détectables (198) disposés parallèlement à la direction du déplacement de balayage, à une certaine position pour détection par le moyen photosensible ; un moyen (206) pour compter, pendant le balayage, le nombre de repères détectés par le moyen photosensible afin de produire une valeur représentative d'une position ; et un moyen pour comparer la valeur comptée à une valeur de position désirée afin de produire une réponse de contre-réaction pour le moyen de balayage ;
caractérisé en ce que la matrice (64) est supportée sur un chariot de balayage (60) conçu pour déplacement de balayage relatif par rapport au document et orienté transversalement à la direction du déplacement de balayage ; en ce que
le dispositif de balayage et de numérisation d'entrée peut être mis en oeuvre dans au moins des premier et second modes ; en ce que
le moyen de balayage (32, 34, 82 à 84, 162 ; 34, 62, 110, 162) comprend un moyen d'entraînement (162) pour entraîner de manière commandable, dans lesdits premier et second modes, respectivement, l'un dudit chariot de balayage ou dudit document par rapport à l'autre ; en ce que
le moyen photosensible comprend une pluralité d'éléments photosensibles de ladite matrice d'éléments photosensibles ; et en ce que le dispositif de balayage et de numérisation comprend en outre
un moyen pour obtenir, à partir d'un flux de données d'images produit périodiquement comprenant des signaux représentatifs de la lumière réfléchie détectée par chaque élément photosensible dans la matrice, les signaux provenant de ladite pluralité d'éléments photosensibles représentant la lumière réfléchie à partir de ladite cible à fine résolution, pour utilisation par ledit moyen de comptage.

2. Dispositif de balayage et de numérisation selon la revendication 1, dans lequel la cible à résolution fine comprend une matrice de lignes, chaque ligne étant séparée par un espace de dimension équivalente, lesdites lignes ayant une longueur approximativement équivalente audit groupe d'éléments photosensibles et orientées parallèlement à ladite matrice d'éléments photosensibles.

3. Dispositif de balayage et de numérisation selon revendication 2, dans lequel ledit moyen pour le comptage, pendant le déplacement de balayage, compte le nombre de repères détectés, comprend un détecteur de transition pour déterminer le déplacement d'une ligne à un espace entre les lignes successives comprenant une transition, et un compteur pour compter les transitions détectées, ladite valeur du compteur produisant ladite valeur représentative de la position.

4. Dispositif de balayage et de numérisation selon l'une quelconque des revendications précédentes, comprenant un moyen comprenant pour obtenir, à partir des données d'image produites par ladite matrice, les signaux provenant dudit groupe d'éléments photosensibles représentant la réflexion de la lumière à partir de la cible à résolution fine.

5. Dispositif de balayage et de numérisation selon l'une quelconque des revendications précédentes, comprenant une surface de support de document pour supporter un document ayant une image devant être balayée, et dans lequel la cible à résolution fine est supportée sur la surface de support du document.

6. Dispositif de balayage et de numérisation selon revendication 5, dans lequel le chariot de balayage peut se déplacer devant un document sur la surface de support.

7. Procédé pour obtenir des informations positionnelles dans un dispositif de balayage et de numérisation d'entrée comprenant : une matrice allongée (64) d'éléments photosensibles pour obtenir à partir d'un document (D) une représentation électronique d'une image sur le document, basée sur la lumière détectée réfléchie à partir de celui-ci, ladite matrice étant orientée parallèlement audit document et ; un moyen de balayage (32, 34, 82 à 84, 162 ; 34, 62, 110, 162) pour produire le balayage du document par la matrice ; un moyen (164) pour commander le déplacement du moyen de balayage en fonction du déplacement de balayage actuel détecté, comprenant les étapes consistant à :
monter des éléments photosensibles supportés à une certaine position à l'extérieur de la zone sur laquelle l'image du document est détectable ; et une cible à résolution fine ayant une série de repères détectables (198) disposés parallèlement à la direction du déplacement de balayage, à une certaine position pour détection par le moyen photosensible ;
compter, pendant le balayage, le nombre de repères détectés par le moyen photosensible pour produire une valeur représentative de la position ; et
comparer la valeur comptée à une valeur de position désirée afin de produire une réponse de contre-réaction pour le moyen de balayage ;
caractérisé par le montage de la matrice (64) supportée sur un chariot de balayage (60) conçu pour un déplacement de balayage relatif par rapport au document et orienté transversalement à la direction du déplacement de balayage ; le moyen photosensible comprenant une pluralité d'éléments photosensibles de ladite matrice d'éléments photosensibles ; et en ce que le dispositif de balayage et de numérisation peut être mis en oeuvre dans au moins des premier et second modes, et en ce que le procédé comprend de plus les étapes consistant à :
entraîner de manière commandable, dans lesdits premier et second modes, respectivement, l'un dudit chariot de balayage ou dudit document par rapport à l'autre ; et
obtenir, à partir d'un flux de données d'images périodiquement produit comprenant des signaux représentatifs de la lumière réfléchie détectée par chaque élément photosensible dans la matrice, les signaux provenant de ladite pluralité d'éléments photosensibles représentant la lumière réfléchie à partir de la cible à fine résolution, pour utilisation dans ladite étape de comptage.
